# EUROPEAN PATENT SPECIFICATION

(11) **EP 1 454 254 B1**
(45) Date of publication and mention of the grant of the patent: **03.10.2012**
(21) Application number: 02786914.8
(22) Date of filing: 06.12.2002
(51) Int. Cl.: H04W 8/22, H04L 29/08

(54) **APPARATUS, METHODS AND ARTICLES OF MANUFACTURE FOR WIRELESS COMMUNICATION NETWORKS**
VORRICHTUNGEN, VERFAHREN UND HERSTELLUNGSARTIKEL FÜR DRAHTLOSE KOMMUNIKATIONSNETZE
APPAREIL, PROCEDES ET ARTICLES DE FABRICATION DESTINES A DES RESEAUX DE COMMUNICATION SANS FIL

(30) Priority: 13.12.2001 US 340547 P; 28.08.2002 US 229760
(43) Date of publication of application: 08.09.2004
(73) Proprietor: Thomson Licensing, 92130 Issy-les-Moulineaux (FR)
(72) Inventor: LI, Jun, Plainsboro, NJ 08536 (US); RAMASWAMY, Kumar, Princeton, NJ 08540 (US)
(74) Representative: Le Dantec, Claude
(86) International application number: PCT/US2002/039036
(87) International publication number: WO 2003/052619

(56) References cited:
- EP-A2- 1 083 494
- WO-A1-00/45612
- WO-A1-01/89155
- US-A1- 2001 013 062
- US-A1- 2002 138 603
- US-A1- 2002 174 227
- US-B1- 6 505 160

## Description

### Field of The Invention

The present invention relates to wireless communication networks. More specifically, the present invention relates to information flow through wireless communication networks.

### Background of the Invention

Wireless communication networks provide users with convenient access to information stored on the network. Users of a wireless network (often also known as "mobile users") can access a shared network infrastructure and information stored therein as desired, assuming an appropriate network connection can be made by the user. For example, with access to a wireless network, mobile users can download new or electronic documents, query a remote database, send or receive electronic mail, etc.

Yet providing network access and information transmission capabilities to mobile users is not without technical challenges. For example, presently commercially available wide area wireless networks have limited and expensive bandwidth. The limited and expensive bandwidth of these networks effectively renders impractical multimedia file transfers because of the typically large size of a multimedia file.

Another technical challenge in wireless networking is environmental interference. Buildings and other structures, weather, and other environmental factors may interfere with the wireless signal, and so may introduce noise and echoes, create communication errors etc. This interference makes multimedia transfer even more difficult because of the large size and attendant time requirements of these files.

Yet another technical challenge in providing wireless network access to mobile users is potential network congestion. For example, in densely populated areas, such as metropolitan areas, a number of mobile users could attempt to access a wireless network at the same or similar access points. If the number is too great, that network can become congested and thus be unable to function with desired efficiency. Moreover, if those users are transferring large files, congestion difficulties may increase dramatically.

Thus wireless network connections are often more limited and expensive than wired network connections, with greater potential for transmission errors and congestion. Accordingly, there exists a need for an improved method of uploading and downloading information, especially multimedia files and information, to and from a mobile user via a wireless network.

WO 01/89155 A1 published on November 22, 2001 relates to a system and method for the transfer of digital data to a mobile device.

### Summary Of The Invention

The invention is set forth in attached claims 1 and 3, for a wireless communication network and method respectively.

Additional advantages and novel features of the invention will be set forth in part in the description and figures which follow, and in part will become apparent to those skilled in the art on examination of the following, or may be learned by practice of the invention.

### Brief Description of the Drawings

Figure 1 is a schematic diagram of a preferred embodiment.
Figure 2 is a schematic diagram of a preferred embodiment.

### Detailed Description Of The Preferred Embodiments

In the preferred embodiments, a mobile communication device is provided with a location dependant storage device (or "geographic drive.") Physically, the geographic drive is located on the mobile communication device, and appears to the user of the mobile communication device as a storage mechanism on the device, for example, a disk drive. When connected to a host through a wireless network, the user can request downloading of code, data, information and/or files (referred to generally herein as a "file") to the geographic drive and/or upload a file from the drive. However, the actual downloading or uploading to the geographic drive does not occur instantly over the network to the user's device. Rather, the downloading or uploading request is intercepted by a content redirection component residing on the host (if downloading) or on the user's device (if uploading.) The content redirection component then holds the download or upload until an appropriate connection point is established.

Connection points may be established by the file provider or by the user in various embodiments. A connection point may be established for example when the user makes a separate downloading or uploading connection with his or her mobile device. This connection may be after disconnecting from the wireless network. That separate downloading or uploading connection can only be made at a predetermined wired or wireless connection point. Thus downloading and uploading is controlled and limited to certain connection points, minimizing the impact on the wireless network of downloading and/or uploading, as well as the cost to the network provider and user.

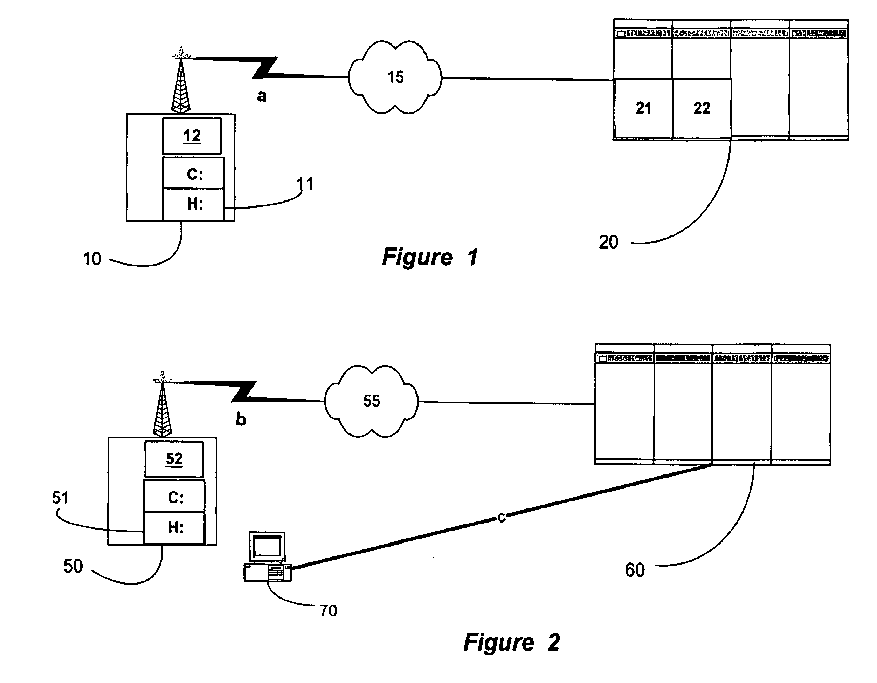

Figure 1 shows an embodiment with mobile communication device 10 with wireless connection a, via network 15, to host 20. The mobile communication device 10, in this embodiment, has a personal digital assistant (PDA) form factor with: both wireless and wired network capabilities; an operating system (OS) (which may be a OS as is known in the art, e.g. Palm OS, Windows CE, Pocket PC, Linux, etc.); and local storage in the form of flash memory 11. (Other embodiments may be of a different configuration, e.g. cell phone, notebook computer, etc., with local storage as is known in the art, e.g. hard drive, etc.) The host, in this and other embodiments may be implemented in Unix^{®} and Unix^{®}-like platforms, including but not limited to Linux^{®} and its variants, as well as other operating system platforms including but not limited to Microsoft Windows^{®} XP, NT, Windows^{®} 2000, Windows^{®} 95, 98 and Me, IBM OS/390, MacOS, VxWorks^{®} and others, and the network may be part of any type of network, e.g., a Local Access Network (LAN), a Wide Area Network (WAN), the Internet, etc..

Flash memory 11 is partitioned into two storage areas, here identified as C: and H:. Storage area C: is a local storage area and provides full user access (that is, read/write access) to the storage area. Storage area H: is a location dependant storage device and provides full user access but limited network access as is further described below.

A process for the embodiment of Figure 1 is as follows. The user may choose a file on the host 20 to be downloaded to the mobile communication device 10 and chooses storage area H: as the target. The request is then intercepted by content redirection component 21 on host 20. Content redirection component 21 transfers the download file to a delayed downloading area 22, which is on the host 20 in this embodiment. In other embodiments, the delayed downloading area 22 may be on another system. For example, the delayed downloading area may be a cache which receives the file "pushed" by the host to the cache. The host, moreover, may push the file according to its own schedule. Alternatively, a content redirection device may be located on the mobile communication device and send a mobile proxy agent to a proxy receiving component on either the cached system or the host. The proxy receiving component then notifies the host to transfer the file to the cache, where it awaits transfer to the mobile communication device. Caching embodiments may also use a cache server as a download mechanism.

Returning to Figure 1, and once the download request is in the delayed downloading area 22, the host 20 awaits a connection point, which occurs in this embodiment when the user reaches a predetermined connection point. The connection point may be, for example, through a wired broadband connection, so that once the user connects with mobile communication device 10 through that wired broadband connection to the host, the content redirection component 21 begins the file download to storage area H:. Once downloaded, the user may refer to the file, etc. as it is now stored locally in storage area H:.

For example, using an embodiment in accordance with the embodiments of Figure 1, a user might, through his or her mobile communication device 10, be connected through a pay per minute wireless network, such as a cellular phone network to a movie Website. The user, after viewing the various offerings available for download on the site, makes his selection, and downloads the movie to his geographic drive. The movie is not downloaded through the cellular network, however. Rather it is downloaded to the user's home machine, through a DSL connection. The movie is then available, once the user connects to the home machine, through the mobile device because the geographic drive is mapped to a drive on the home machine as a connection point. Thus, when the user accesses the geographic drive, he or she is able to view the contents of the local drive as well where the movie has been downloaded. The user can then view the movie, transfer to another local drive on the mobile device and/or the home machine, etc. Thus the user can avoid using the slower and costlier (in this embodiment) cellular network for the video download and instead employ the cheaper and faster (in this embodiment) wired DSL network.

It should be noted that embodiments may be implemented through distributed services as well. For example, a host may be a web server only, with a listing of files, accessible to the user, that is actually stored on one or more other servers. Those one or more servers in turn, would be responsible for transferring the file, through a content redirection component, to a cached system, etc. Thus, one or more systems and/or servers maybe used in various embodiments.

A similar process occurs for uploading file requests. Here the user will transfer the file to be uploaded to storage area H:. Content redirection component 12 on mobile communication device 10 holds the file in H: until an uploading connection is made to the appropriate host. Once the uploading connection is made, the content redirection component 12 uploads the file. It should be noted that uploading requests may occur when the user is unconnected to any network. It should also be noted that in this embodiment, a user can only retrieve a downloaded file from host 20 to geographic drive H:, or upload a file from geographic drive H: to host 20, when mobile communication device 10 is located at the predetermined connection point.

Connection points may be single or multiple, and may be fixed or dynamic, or may be a combination of any of these in various embodiments. Connection points may be established by a number of methods in various embodiments, including file provider established points or user established points. For example, geography may determine provider established connection points, that is, certain connection points may be present in certain geographic locations. Predetermining connection points provides the file provider with the ability to control load on the connection points. Moreover, as described further below, that load may be balanced dynamically, and so connection points may change. Similarly, connection points may be determined through network addressing, so that, for example, users may be assigned access rights depending upon their status with the provider. Those with a preferred status may have a wider number of connection points, flexibility in choosing connection points, etc. than other users. Other methods as well may be used to determine connection points as desired, and other parameters may be used to balance load on the network dynamically through establishing connection points.

Figure 2 shows another preferred embodiment with a fixed connection point established by the user. Mobile communication device 50 has a wireless connection b, via network 55, to host 60. The mobile communication device 50, in this embodiment, has a personal digital assistant (PDA) form factor having: both wireless and wired network capabilities; an operating system (OS) (which may be a OS as is known in the art, e.g. Palm OS, Windows CE, Pocket PC, Linux, etc.); and local storage in the form of flash memory 51.

The flash memory 51 is partitioned into two storage areas, here identified as C: and H:. Storage area C: is a local storage area and provides full user access (that is, read/write access) to the storage area. Storage area H: is a geographic drive and provides full user access but limited network access as is further described below.

Mobile communication device 50 also has a content redirection component 52. When the user requests a download to storage area H:, the content redirection component 52 requests that host 60 deliver the file to a user specified connection point. In this embodiment, that connection point is at a predetermined location elsewhere on the network: user machine 70, connected via a broadband connection c to the network. The user then connects to the user machine 70 via mobile communication device 50 and transfers the download to the geographic drive on the mobile communication device. Alternatively, the user might have begun an upload process by first transferring the file to be uploaded from his or her geographic drive to the user machine 70.

It should be noted that, in various embodiments, more than one connection point may be provided to the user as alternatives. These alternative connection points may be selected automatically, manually, or a combination of both in various embodiments. Thus the user may be in various physical locations to access download data, as long as there is a valid connection point therein. Automatic notification of valid connection points may be provided through a location determining component included in a mobile communication device, or in the communication network, which resolves valid connection points, or both.

One preferred embodiment allows the mobile user to input a travel plan, location and timing information into a location determining component on his or her mobile communication device. The component then will choose valid connection points for the user, based on the input information. This embodiment of a location determining device allows the mobile user to access requested data while travelling. Another embodiment of a location determining device uses a positioning system to track and predict the mobile user's location at a future time. When the mobile user arrives at the determined future location, the mobile user is able to connect and download the data that has been requested. In yet other embodiments, the user may select another authorized system as a connection point, so that, for example, the user may transmit a file to another's system if desired.

The geographic drive used in the various preferred embodiments may have a various drive geographies. A preferred embodiment of a geographic drive is a dynamic drive whose size is dynamically adapted to the size of the files to be downloaded or uploaded. Other preferred embodiments of a geographic drive comprise a virtual geographic drive, which shares space with a local storage device in a mobile communication device. For example, the geographic drive may be mapped to a drive on a second user system, such as through a connection point as is further described above. When the user accesses the geographic drive, he or she is able to view the contents of the local drive as well. Moreover, the user can then use the geographic drive to transfer a file through the higher bandwidth network, because the file is actually traveling through the mapped local drive and from there through the higher bandwidth network. If desired, the user may view the local drive under its own storage designation as well as viewing it through a geographic drive storage designation.

The above description and the views and material depicted by the figures are for purposes of illustration only and are not intended to be, and should not be construed as, limitations on the invention. Moreover, certain modifications or alternatives may suggest themselves to those skilled in the art upon reading of this specification.

## Claims

1. A wireless communication network comprising:
a host (20, 60) having a content redirection component (21) and a delayed downloading area (22);
a mobile communication device (10, 50) having a flash memory (11, 51) connected to said host (20) via a wireless network connection;
**characterized in that** the content redirection component (21) of the host (20, 60) is adapted to intercept a file request sent to the host (20, 60) from the mobile device (10, 50) and to tranfer the requested file to the delayed downloading area (22) within the host for downloading to the flash memory (11) via a wired broadband connection once the wired broadband connection is made between the mobile communication device and the host.

2. A wireless communication network as in claim 1 wherein said delayed downloading area further comprises a cache.

3. A method of network communication comprising:
connecting a mobile communication device (10, 50) comprising a flash memory (11) to a host (20, 60) on a wireless network;
requesting a file on the host (20, 60), via the mobile communication device (10, 50), the file to be transferred to the flash memory (11);
transferring the file from the host (20, 60) to a delayed downloading area (22) within the host; and
transferring the file from the delayed downloading area (22) to the flash memory (11) using a broadband wired connection once the wired broadband connection is made between the mobile communication device and the host.

4. The method as in claim 3, wherein the step of transferring the file from the delayed downloading area (22) to the flash memory (11) comprises transferring the file to the flash memory (11) via a connection point having a network address.

5. The method as in claim 4, wherein said connection point further comprises a predetermined connection point.

6. The method as in claim 4, wherein said connection point further comprises a dynamically established connection point.

## Patentansprüche

1. Drahtloses Kommunikationsnetz, das umfasst:
einen Host (20, 60) mit einer Inhaltsumleitungskomponente (21) und mit einem Bereich (22) zum verzögerten Herunterladen;
eine Mobilkommunikationsvorrichtung (10, 50) mit einem Flash-Speicher (11, 51), die über eine Drahtlosnetzverbindung mit dem Host (20) verbunden ist;
**dadurch gekennzeichnet, dass** die Inhaltsumleitungskomponente (21) des Hosts (20, 60) zum Abfangen einer von der Mobilvorrichtung (10, 50) an den Host (20, 60) gesendeten Dateianforderung und zum Übertragen der angeforderten Datei an den Bereich (22) zum verzögerten Herunterladen in dem Host, um sie über eine verdrahtete Breitbandverbindung in den Flash-Speicher (11) herunterzuladen, wenn die verdrahtete Breitbandverbindung zwischen der Mobilkommunikationsvorrichtung und dem Host aufgebaut worden ist, ausgelegt ist.

2. Drahtloses Kommunikationsnetz nach Anspruch 1, bei dem der Bereich zum verzögerten Herunterladen ferner einen Cache enthält.

3. Verfahren für die Netzkommunikation, das umfasst:
Verbinden einer Mobilkommunikationsvorrichtung (10, 50), die einen Flash-Speicher (11) umfasst, mit einem Host (20, 60) in einem drahtlosen Netz;
Anfordern einer Datei in dem Host (20, 60) über die Mobilkommunikationsvorrichtung (10, 50), wobei die Datei in den Flash-Speicher (11) zu übertragen ist;
Übertragen der Datei von dem Host (20, 60) zu einem Bereich (22) zum verzögerten Herunterladen innerhalb des Hosts; und
Übertragen der Datei von dem Bereich (22) zum verzögerten Herunterladen zu dem Flash-Speicher (11) unter Verwendung einer verdrahteten Breitbandverbindung, wenn die verdrahtete Breitbandverbindung zwischen der Mobilkommunikationsvorrichtung und dem Host aufgebaut worden ist.

4. Verfahren nach Anspruch 3, bei dem der Schritt des Übertragens der Datei von dem Bereich (22) zum verzögerten Herunterladen zu dem Flash-Speicher (11) das Übertragen der Datei zu dem Flash-Speicher (11) über einen Verbindungspunkt mit einer Netzadresse umfasst.

5. Verfahren nach Anspruch 4, bei dem der Verbindungspunkt ferner einen vorgegebenen Verbindungspunkt umfasst.

6. Verfahren nach Anspruch 4, bei dem der Verbindungspunkt ferner einen dynamisch festgesetzten Verbindungspunkt umfasst.

## Revendications

1. Réseau de communication sans fil comprenant :
un hôte (20, 60) disposant d'un composant de redirection de contenu (21) et une zone de téléchargement différé (22) ;
un dispositif de communication mobile (10, 50) disposant d'une mémoire flash (11, 51) connectée audit hôte (20) via une connexion réseau sans fil ;
**caractérisé en ce que** le composant de redirection de contenu (21) de l'hôte (20, 60) est adapté pour intercepter une requête de fichier envoyée à l'hôte (20, 60) depuis le dispositif mobile (10, 50) et pour transférer le fichier requis à la zone de téléchargement différé (22) au sein de l'hôte pour le téléchargement sur la mémoire flash (11) via une connexion câblée à large bande une fois la connexion câblée à large bande effectuée entre le dispositif de communication mobile et l'hôte.

2. Réseau de communications sans fil tel que dans la revendication 1 dans lequel ladite zone de téléchargement différé comprend une mémoire cache.

3. Procédé de communication réseau comprenant :
la connexion d'un dispositif de communication mobile (10, 50) comprenant une mémoire flash (11, 51) à un hôte (20, 60) sur un réseau sans fil ;
la requête d'un fichier sur l'hôte (20, 60), via le dispositif de communication mobile (10, 50), le fichier à transférer sur la mémoire flash (11) ;
le transfert du fichier depuis l'hôte (20, 60) à une zone de téléchargement différé (22) au sein de l'hôte ; et
le transfert du fichier depuis la zone de téléchargement différé (22) à la mémoire flash (11) en utilisant un connexion câblée à large bande une fois la connexion câblée à large bande effectuée entre le dispositif de communication mobile et l'hôte.

4. Procédé selon la revendication 3, dans lequel le transfert du fichier depuis la zone de téléchargement différé (22) à la mémoire flash (11) comprend le transfert du fichier à la mémoire flash (11) via un point de connexion disposant d'une adresse réseau.

5. Procédé selon la revendication 4, dans lequel ledit point de connexion comprend en outre un point de connexion prédéterminé.

6. Procédé selon la revendication 4, dans lequel ledit point de connexion comprend en outre un point de connexion prédéterminé.
